# EUROPEAN PATENT SPECIFICATION

(11) **EP 3 205 850 B1**
(45) Date of publication and mention of the grant of the patent: **29.07.2020**
(21) Application number: 17155900.8
(22) Date of filing: 13.02.2017
(51) Int. Cl.: F01D 25/36, F02C 7/275

(54) **GAS TURBINE ENGINE MOTORING VARIABLE FREQUENCY GENERATOR SYSTEM FOR BOWED ROTOR ENGINE STARTS**
FREQUENZVARIABLES GASTURBINENMOTORMOTORISIERUNGSGENERATORSYSTEM FÜR STARTS VON MOTOREN MIT GEBOGENEM ROTOR
SYSTÈME DE GÉNÉRATEUR À FRÉQUENCE VARIABLE DESTINÉ AU CONTRÔLE D'UN MOTEUR À TURBINE À GAZ POUR DÉMARRAGES DE MOTEUR À ROTOR COURBÉ

(30) Priority: 12.02.2016 US 201662294551 P
(43) Date of publication of application: 16.08.2017
(73) Proprietor: Hamilton Sundstrand Corporation, Charlotte, NC 28217-4578 (US)
(72) Inventor: PECH, John T., Canton, CT Connecticut 06019 (US); SPIERLING, Todd A., Rockford, IL Illinois 61109 (US)
(74) Representative: Dehns

(56) References cited:
- EP-A2- 2 554 799
- EP-A2- 2 636 873
- US-A- 6 093 975
- US-A1- 2004 070 373
- US-A1- 2007 029 804

## Description

### BACKGROUND

The embodiments herein generally relate to gas turbine engines and more specifically, systems and method for cooling gas turbine engines.

Aircraft gas turbine engines are being designed with tighter internal clearances between engine cases and blades of the compressor and turbine to increase efficiency and reduce fuel burn. These tighter clearances can result in compressor blade tips and turbine blade tips rubbing on the engine cases if the engine core bows as it cools down between flights and an engine start is attempted.

After engine shutdown, the main shafts, compressor disks, turbine disks and other parts with large thermal mass cool at different rates. The heat rises to the top of the engine allowing the lower portions of these parts to become cooler than the upper portions. This causes blade tip clearance between the engine case and blades of the compressor and turbine to decrease as the engine shafts and cases bow temporarily due to uneven thermal conditions. This does not present a problem for the engine unless an engine start is attempted while the bowed condition exists. To address this engine manufacturers have found that motoring the engine at relatively low speed for a period of time prior to engine start allow the parts to achieve uniform thermal conditions and eliminate the bowed condition restoring blade tip to engine case clearances.

The problem is how to motor the engine at very specific speeds for up to four minutes prior to engine start? Pneumatic or Air Turbine Starters are typically duty cycle limited due to lubrication issues and heat dissipation. Butterfly type start valves are typically solenoid actuated and have diaphragms and linkage in the actuator piston assembly that are prone to wear if they are being used to modulate and control starter speed. This type of operation decreases the valve and start life significantly. A more efficient method of motoring the gas turbine engine that does not cause excessive wear and tear is desired.

EP2554799 discloses a gas turbine engine with an air turbine starter. US2007/0029804, US2004/0070373 and US6093975 disclose gas turbine engines with variable frequency generators.

### BRIEF DESCRIPTION

According to one embodiment, an engine starting system according to claim 1 is provided. The engine starting system comprises: a gas turbine engine including rotational components comprising an engine compressor, an engine turbine, and a rotor shaft operably connecting the engine turbine to the engine compressor, wherein each rotational component is configured to rotate when any one of the rotational components is rotated; a variable frequency generator operably connected to at least one of the rotational components, the variable frequency generator being configured to rotate the rotational components; and a motor controller in electronic communication with the variable frequency generator, the motor controller being configured to command the variable frequency generator to rotate the rotational components at a selected angular velocity for a selected period of time, and an air turbine starter comprising a turbine wheel including a hub integrally attached to a turbine rotor shaft and a plurality of turbine blades extending radially from the hub, the turbine rotor shaft being operably connected to at least one of the rotational components and configured to rotate the rotational components when air flows through the turbine blades and rotates the turbine wheel.

In addition to the features described above, further embodiments of the engine starting system may include an accessory gearbox operably connecting the variable frequency generator to at least one of the rotational components.

In addition to one or more of the features described above, or as an alternative, in further embodiments of the engine starting system the variable frequency generator is configured to generate electricity when the rotational components are rotating under power of the gas turbine engine.

In addition to one or more of the features described above, or as an alternative, further embodiments of the engine starting system may include: an auxiliary power unit fluidly connected to the air turbine starter and electrically connected to the variable frequency generator, the auxiliary power unit being configured to generate electricity to power the variable frequency generator and provide air to the air turbine starter to rotate the turbine blades.

In addition to one or more of the features described above, or as an alternative, further embodiments of the engine starting system may include: a starter air valve fluidly connecting the auxiliary power unit to the air turbine starter, the starter air valve being configured to adjust airflow from the auxiliary power unit to the air turbine starter.

According to another embodiment, a method according to claim 6 of assembling an engine starting system for a gas turbine engine comprises:
obtaining a gas turbine engine including rotational components comprising an engine compressor, an engine turbine, and a rotor shaft operably connecting the engine turbine to the engine compressor, wherein each rotational component is configured to rotate when any one of the rotational components is rotated; operably connecting a variable frequency generator to at least one of the rotational components, the variable frequency generator being configured to rotate the rotational components; and electrically connecting a motor controller to the variable frequency generator, the motor controller being configured to command the variable frequency generator to rotate the rotational components at a selected angular velocity for a selected period of time, and operably connecting an air turbine starter to at least one of the rotational components, the air turbine starter comprising a turbine wheel including a hub integrally attached to a turbine rotor shaft and a plurality of turbine blades extending radially from the hub, wherein the turbine rotor shaft is configured to rotate the rotational components when air flows through the turbine blades and rotates the turbine wheel.

In addition to the features described above, in further embodiments of the method of assembling an engine starting system, the variable frequency generator is operably connected to at least one of the rotational components through an accessory gearbox.

In addition to one or more of the features described above, or as an alternative, in further embodiments of the method of assembling an engine starting system, the variable frequency generator generates electricity when the rotational components are rotating under power of the gas turbine engine.

In addition to one or more of the features described above, or as an alternative, further embodiments of the method of assembling an engine starting system may include: fluidly connecting an auxiliary power unit to the air turbine starter, the auxiliary power unit being configured to provide air to the air turbine starter to rotate the turbine blades; and electrically connecting the variable frequency generator to the auxiliary power unit, the auxiliary power unit being configured to generate electricity to power the variable frequency generator.

In addition to one or more of the features described above, or as an alternative, in further embodiments of the method of assembling an engine starting system, a starter air valve fluidly connects the auxiliary power unit to the air turbine starter, the starter air valve being configured to adjust airflow from the auxiliary power unit to the air turbine starter.

According to another embodiment not forming part of the present invention, a method of cooling a gas turbine engine is provided. The method comprises: rotating, using a variable frequency generator, rotational components of a gas turbine engine, the rotational components comprising an engine compressor, an engine turbine, and a rotor shaft operably connecting the engine turbine to the engine compressor, wherein each rotational component is configured to rotate when any one of the rotational components is rotated.

In addition to one or more of the features described above, or as an alternative, further embodiments of the method of cooling a gas turbine engine may include: controlling, using a motor controller, operation of the variable frequency generator, the motor controller being configured to command the variable frequency generator to rotate the rotational components at a selected angular velocity for a selected period of time.

In addition to one or more of the features described above, or as an alternative, further embodiments of the method of cooling a gas turbine engine may include: detecting a failure in a starter air valve prior to rotating the gas turbine engine with the variable frequency generator, the starter air valve being fluidly connected to an air turbine starter and configured to provide air to the air turbine starter, wherein the air turbine starter is operably connected to at least one of the rotational components and configured to rotate the rotational components.

In addition to one or more of the features described above, or as an alternative, further embodiments of the method of cooling a gas turbine engine may include: detecting when a temperature of the gas turbine engine is less than a selected temperature; and displaying a message on a cockpit display when the temperature of the gas turbine engine is less than a selected temperature.

In addition to one or more of the features described above, or as an alternative, further embodiments of the method of cooling a gas turbine engine may include: stopping the utilization of the variable frequency generator to rotate the gas turbine engine when a temperature of the gas turbine engine is less than a selected temperature.

In addition to one or more of the features described above, or as an alternative, further embodiments of the method of cooling a gas turbine engine may include: opening a starter air valve after the message has been displayed on the cockpit display, the starter air valve being fluidly connected to an air turbine starter and configured to provide air to the air turbine starter, wherein the air turbine starter is operably connected to at least one of the rotational components and configured to rotate the rotational components.

In addition to one or more of the features described above, or as an alternative, further embodiments of the method of cooling a gas turbine engine may include: rotating, using the air turbine starter, rotational components of the gas turbine engine when the starter air valve is opened, the air turbine starter comprising a turbine wheel including a hub integrally attached to a turbine rotor shaft and a plurality of turbine blades extending radially from the hub, the turbine rotor shaft being operably connected to at least one of the rotational components and configured to rotate the rotational components when air flows through the turbine blades and rotates the turbine wheel.

Technical effects of embodiments of the present disclosure include utilizing a variable frequency generator operably connected to an aircraft main engine for cool-down motoring to prevent bowed rotor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft engine starting system, according to an embodiment of the disclosure;
FIG. 2 is a schematic illustration of an example variable frequency generator of the aircraft engine starting system of FIG. 1, according to an embodiment of the disclosure;
FIG. 3 is a schematic illustration of an example air turbine starter of the aircraft engine starting system of FIG. 1, according to an embodiment of the disclosure;
FIG. 4 is a flow diagram illustrating a method of assembling an engine starting system for a gas turbine engine, according to an embodiment of the present disclosure; and
FIG. 5 is a flow diagram illustrating a method of cooling a gas turbine engine, according to an embodiment not forming part of the present invention.

### DETAILED DESCRIPTION

A detailed description of one or more embodiments of the disclosed apparatus and method are presented herein by way of exemplification and not limitation with reference to the Figures.

Various embodiments of the present disclosure are related to a bowed rotor start mitigation system in a gas turbine engine. Embodiments include using a variable frequency generator to control a rotor speed of a gas turbine engine to mitigate a bowed rotor condition using a cool-down motoring process. Cool-down motoring may be performed by running an engine starting system at a lower speed with a longer duration than typically used for engine starting using a variable frequency generator to maintain a rotor speed and/or profile. Cool-down motoring (engine bowed rotor motoring) may be performed by the variable frequency generator, which may rotate the gas turbine engine continuously between about 0 to 3000 RPM (engine core speed).

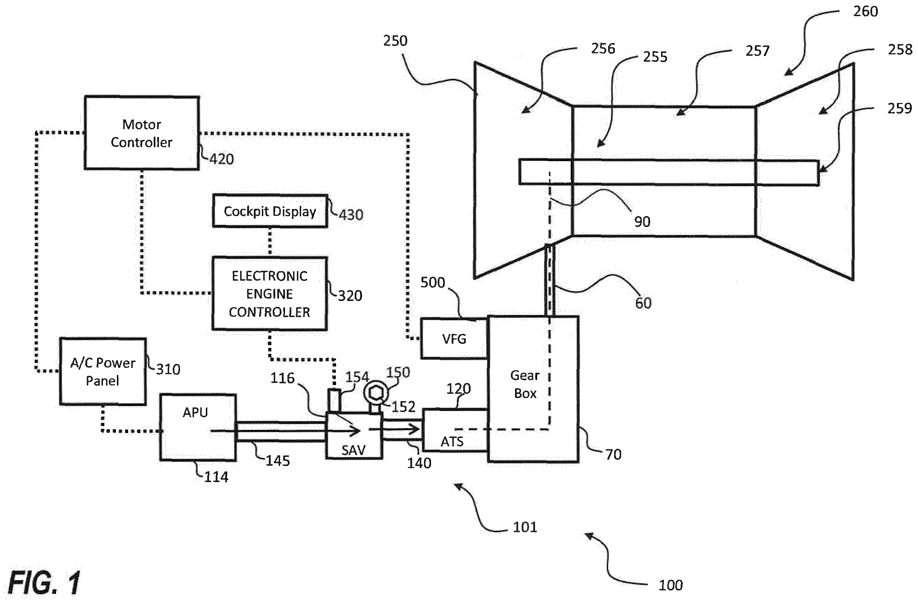

Referring now to the figures, FIG. 1 shows a block diagram of a gas turbine engine 250 and an associated engine starting system 100 with a valve system 101 according to an embodiment of the present disclosure. The valve system 101 includes a starter air valve (SAV) 116 operably connected in fluid communication with an air turbine starter (ATS) 120 of the engine starting system 100 through at least one duct 140. The valve system 101 is operable to receive a compressed air flow from a compressed air source through one or more ducts 145. In the illustrated embodiment, the compressed air source is an auxiliary power unit (APU) 114. The compressed air source may also be a ground cart or a cross-engine bleed.

An air turbine starter 120 of the engine starting system 100 is operably connected to the gas turbine engine 250 through an accessory gearbox 70 and drive shaft 60 (e.g., a tower shaft), as shown in FIG. 1. As depicted in the example of FIG. 1, the air turbine starter 120 is connected to the gas turbine engine 250 by a drive line 90, which runs from an output of the air turbine starter 120 to the accessory gearbox 70 through the drive shaft 60 to a rotor shaft 259 of the gas turbine engine 250. Operable connections can include gear mesh connections that in some instances can be selectively engaged or disengaged, for instance, through one or more clutches. The air turbine starter 120 is configured to initiate a startup process of the gas turbine engine 250 driving rotation of the rotor shaft 259 of a starting spool 255 of the gas turbine engine 250. The rotor shaft 259 operably connects an engine compressor 256 to an engine turbine 258. Thus, once the engine compressor 256 starts spinning, air is pulled into combustion chamber 257 and mixes with fuel for combustion. Once the air and fuel mixture combusts in the combustion chamber 257, a resulting compressed gas flow drives rotation of the engine turbine 258, which rotates the engine turbine 258 and subsequently the engine compressor 256. Once the startup process has been completed, the air turbine starter 120 can be disengaged from the gas turbine engine 250 to prevent over-speed conditions when the gas turbine engine 250 operates at its normal higher speeds. Although only a single instance of an engine compressor-turbine pair of starting spool 255 is depicted in the example of FIG. 1, it will be understood that embodiments can include any number of spools, such as high/mid/low pressure engine compressor-turbine pairs within the gas turbine engine 250.

The air turbine starter 120 is further operable to drive rotation of the rotor shaft 259 at a lower speed for a longer duration than typically used for engine starting in a motoring mode of operation (also referred to as cool-down motoring) to prevent/reduce a bowed rotor condition. If a bowed rotor condition has developed, for instance, due to a hot engine shutdown and without taking further immediate action, cool-down motoring may be performed by the air turbine starter 120 to reduce a bowed rotor condition by driving rotation of the rotor shaft 259.

A electronic engine controller 320, such as full authority digital engine control (FADEC), typically controls engine starting system 100, the gas turbine engine 250, and controls performance parameters of the gas turbine engine 250 such as for example engine temperature, engine, speed, and fuel flow. The electronic engine controller 320 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The electric engine controller 320 controls valve operation, for instance, modulation of the starter air valve 116 to control a motoring speed of the gas turbine engine 250 during cool-down motoring. The starter air valve 116 delivers air through a duct 140 to the air turbine starter 120. If the starter air valve 116 fails shut, a corresponding manual override 150 can be used to manually open the starter air valve 116. The manual override 150 can include a tool interface 152 to enable a ground crew to open the starter air valve 116. During regular operation, the starter air valve 116 may be opened and closed using a solenoid 154. The solenoid 154 may be modulated to control a motoring speed of the gas turbine engine 250 during cool-down motoring. The solenoid 154 may be in electrical communication with the electronic engine controller 320.

Alternatively, the motoring speed of the gas turbine engine 250 may also be controlled by a variable frequency generator (VFG) 500. Advantageously, the a variable frequency generator 500 may be utilized for cool-down motoring in many scenarios including but not limited to when the solenoid 154 fails and can no longer modulate the starter air valve 116 for cool-down motoring. In the event the starter air valve 116 is failed and a manual start is required, the electronic engine controller 320 may transmit a message to be displayed on a cockpit display 320 indicating that a manual start is required. In this case, the variable frequency generator 500 could motor the gas turbine engine 250 until it is cooled and then the electronic engine controller 320 could provide a cockpit message to the cockpit display 430 indicating when the engine is cooled sufficiently to allow a crew member to manually open the starter air valve 116 using the manual override 150 and start the gas turbine engine 250. Also advantageously, the variable frequency generator 500 may be used regularly for cool-down motoring in order to reduce wear-tear on the starter air valve 116 and associated solenoid 154 that may be caused by the modulation of the starter air valve 116 when the starter air valve 116 performs cool down motoring.

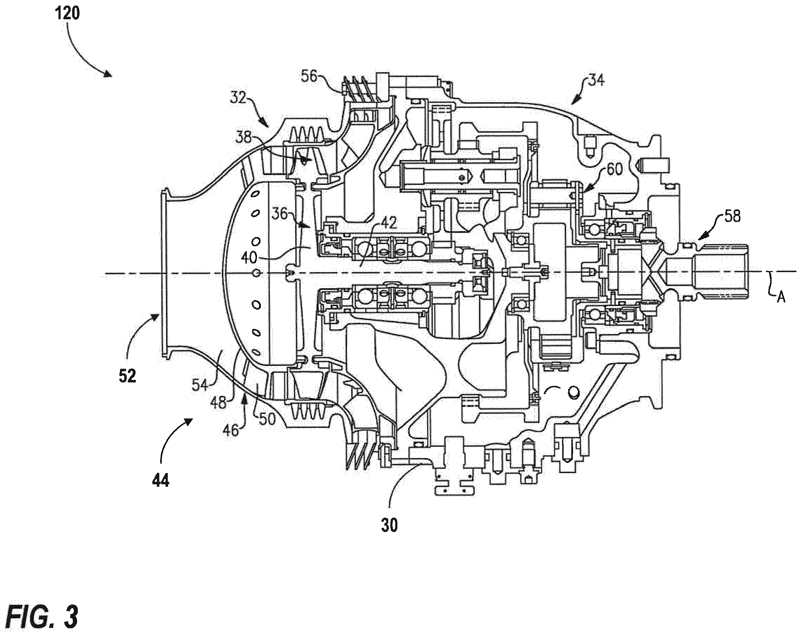

The variable frequency generator 500 may be used as the primary means for motoring the gas turbine engine 250 and the starter air valve 116 may be used as secondary means for motoring the gas turbine engine 350 or vice versa. The variable frequency generator 500 and the starter air valve 116 may also be used in combination with each other to motor the gas turbine engine 350. As seen in FIG.1, the variable frequency generator 500 is operably connected to at least one of the rotational components 260 of the gas turbine engine 250. The accessory gear box 70 may operably connect the variable frequency generator 500 to at least one of the rotational components 260 of the gas turbine engine 250. The rotational components 260 may include but are not limited to the engine compressor 265, the engine turbine 258, and the rotor shaft 259 operably connecting the engine turbine 258 to the engine compressor 256. Each rotational component 260 is configured to rotate when any one of the rotational components 260 is rotated, thus the rotation components may rotate in unison. The variable frequency generator 500 is configured to rotate the rotational components 260 of the gas turbine engine 250 for cool-down motoring to prevent bowed rotor. The variable frequency generator 500 is electrically connected to the auxiliary power unit 114. As mentioned above, the auxiliary power unit 114 is configured to provide air to the air turbine starter 120 to rotate the turbine blades 38 (see FIG. 3). The auxiliary power unit 114 is also configured to generate electricity to power the variable frequency generator 500. The auxiliary power unit 114 may be electrically connected to the variable frequency generator 500 through an A/C power panel 310. The variable frequency generator 500 may also be used to generate electricity when the rotational components 260 are rotating under power of the gas turbine engine 250.

The variable frequency generator 500 is controlled by the electronic engine controller 320 and/or a motor controller 420 electrically connected to the variable frequency generator 500. The motor controller 420 is in electronic communication with the variable frequency generator 500. The motor controller 420 is configured to command the variable frequency generator 500 to rotate the rotational components 260 at a selected angular velocity for a selected period of time to perform cool-down motoring. The motor controller 420 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

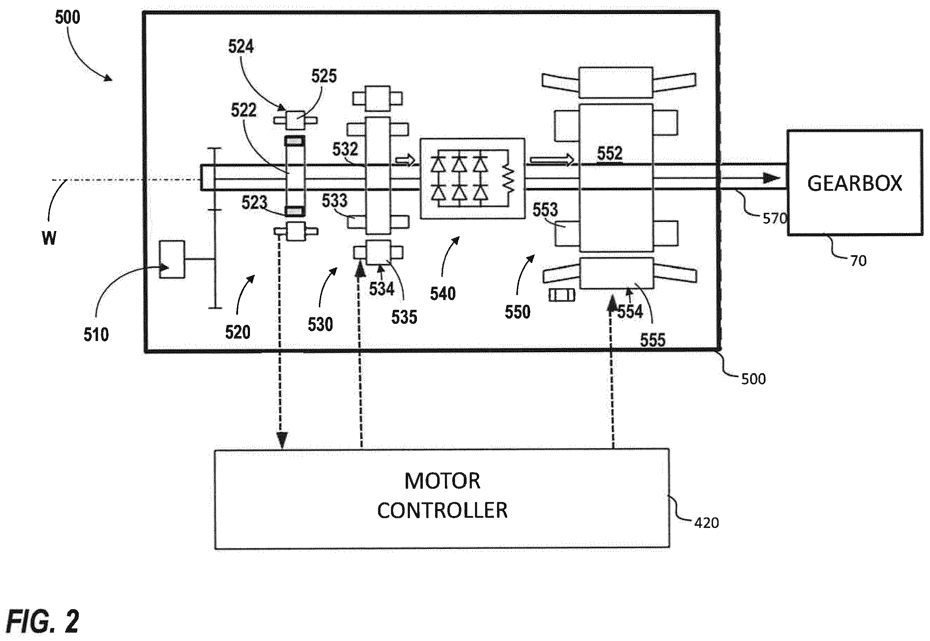

We refer now to FIG. 2, which shows a non-limiting example of a variable frequency generator 500. As seen in FIG. 2, the variable frequency generator 500 may comprise a permanent magnet generator 520, an exciter generator 530, a rectifier assembly 540, and a main generator 550. An oil pump 510 may also be included to provide thermal lubrication and cooling to the variable frequency generator 500 as required. The permanent magnet generator 520, the exciter generator 530, and the main generator 550 may each be brushless. The permanent magnet generator 520, the exciter generator 530, and the main generator 550 may each be in electrical communication with the motor controller 420 and may provide electrical power to the motor controller 420 and/or receive electrical power from the motor controller 420. The permanent magnet generator 520 includes permanent magnets 523 employed on a rotating portion 522 and windings 524 on a stator portion 524. The exciter generator 530 includes rotating exciter armature windings 533 on a rotating portion 532 and exciter winding 535 on a stationary portion 534. The rotating rectifier assembly 540 may include six diode groups to provide a 3-phase full wave bridge rectification. The main generator 550 includes main field winding 553 on a rotating portion 552 and generator armature winding 555 of a stationary portion 554. The rotating portion 522 of the permanent magnet generator 520, the rotating portion 532 of the exciter generator, the rotating rectifier assembly 540, and the rotating portion 552 of the main generator may each be operably connected to a shaft 570 of the variable frequency generator 500 and configured to rotate with the shaft 570 around an axis of rotation W.

In a first scenario, the variable frequency generator 500 may be used to rotate the rotational components 260 of the gas turbine engine 250, such as, for example, cool down motoring. When the variable frequency generator 500 is activated, current is applied to the generator armature winding 555 of the main generator 550 such that a flux field is generated and this flux field interacts with the a main field winding 553 on the rotating portion 552 to cause the rotating portion 552 and subsequently the shaft 570 to rotate about the rotational axis W. The rotor element 520 may be operably connected to the rotational components 260 of the gas turbine engine 250 through the shaft 570. The rotation of the shaft 570 rotates the rotating portion 522 of the permanent magnet generator 520 and also the magnets 523 on the rotating portion 522. The rotation of magnets 523 generates an alternating current voltage on windings 524 of the stator portion 525. The AC voltage provided by the permanent magnet generator 520 is rectified and selectively applied to an exciter winding 535 on a stationary portion 534 of the exciter generator 530. The exciter winding 535 generates a field that interacts with rotating exciter armature windings 533 on a rotating portion 532 of the exciter generator 530 to provide an AC voltage. A rotating rectifier assembly 540 rectifies the AC voltage and supplies the DC voltage to a main field winding 553 on the rotating portion 552 of the main generator 550. The voltage on the main field windings 553 rotates the rotating portion 552 when the variable frequency generator 500 is activated and current is applied to the generator armature winding 555 of the main generator 550.

In a second scenario, the variable frequency generator 500 may be used to generate electricity when the rotational components 260 are rotating under power of the gas turbine engine 250. The rotating portion 522 may be operably connected to the gear box 70 and configured to rotate when the gear box 70 rotates. As mentioned above, the gear box 70 is operably connected to rotational components 260 and thus will rotate with the rotational components 260 rotate. When in the second scenario of power generation, the rotation of magnets 523 generates an alternating current voltage on windings 524 of the stator portion 525. The AC voltage provided by the permanent magnet generator 520 is rectified and selectively applied to an exciter winding 535 on a stationary portion 534 of the exciter generator 530. The exciter winding 535 generates a field that interacts with rotating exciter armature windings 533 on a rotating portion 532 of the exciter generator 530 to provide an AC voltage. A rotating rectifier assembly 540 rectifies the AC voltage and supplies the DC voltage to a main field winding 553 on the rotating portion 552 of the main generator 550. The rotating portion 552 may be operably connected to the gear box 70 and configured to rotate when the gear box 70 rotates. Rotation of the shaft 570 and the main field winding 553 induces three-phase AC output voltage on the generator armature winding 555 of the stationary portion 554 of the main generator 550.

Referring now to FIG. 3, FIG. 3 schematically illustrates a non-limiting example of an air turbine starter 120 that may be used to initiate the rotation of a gas turbine engine 250 (see FIG. 1), such as a turbofan engine through an accessory gearbox 70, as described above. As mentioned above, the air turbine starter 120 may serve as a primary or secondary means of motoring the gas turbine engine 250. The air turbine starter 120 generally includes a housing assembly 30 that includes at least a turbine section 32 and an output section 34. The turbine section 32 includes a turbine wheel 36 with a plurality of turbine blades 38, a hub 40, and a turbine rotor shaft 42. The turbine blades 38 of the turbine wheel 36 are located downstream of an inlet housing assembly 44 which includes an inlet housing 46 which contains a nozzle 48. The nozzle 48 includes a plurality of turbine vanes 50 which direct compressed air flow from an inlet 52 through an inlet flowpath 54. The compressed air flows past the vanes 50 drives the turbine wheel 36 then is exhausted through an outlet 56.

The turbine wheel 36 is driven by the compressed airflow such that the turbine rotor shaft 42 may mechanically drive a starter output shaft 58 though a gear system 60, such as a planetary gear system. The air turbine starter 120 thereby transmits relatively high loads through the gear system 60 to convert the pneumatic energy from the compressed air into mechanical energy to, for example, rotate the gas turbine engine 250 for start. The turbine blades 38 of the turbine wheel 36 and the vanes 50 of the nozzle 48 - both of which are defined herein as airfoils - may be defined with computational fluid dynamics (CFD) analytical software and are optimized to meet the specific performance requirements of a specific air turbine starter.

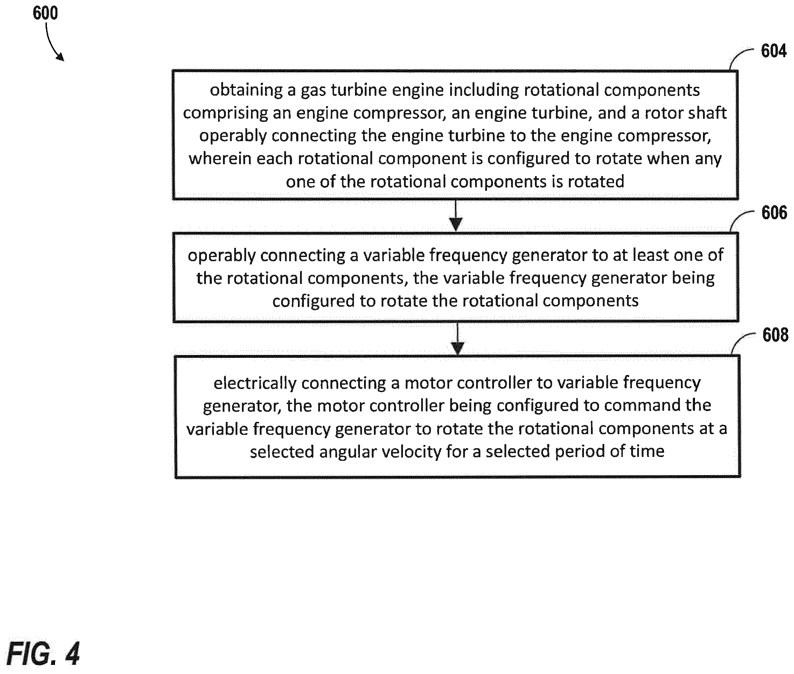

Turning now to FIG. 4 while continuing to reference FIGS. 1 to 3, FIG. 4 shows a flow diagram illustrating a method 600 of assembling an engine starting system 100 for a gas turbine engine 250, according to an embodiment of the present disclosure. At block 604, a gas turbine engine 250 is obtained. As mentioned above, the gas turbine engine 250 may include rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. At block 606, a variable frequency generator 500 is operably connected to at least one of the rotational components 260. As mentioned above, the variable frequency generator 500 is configured to rotate the rotational components 260. At block 608, a motor controller 420 is electrically connected to the variable frequency generator 500. As mentioned above, the motor controller 420 is configured to command the variable frequency generator 500 to rotate the rotational components 260 at a selected angular velocity for a selected period of time for cool-down motoring.

The method 600 also includes: operably connecting an air turbine starter 120 to at least one of the rotational components 260. The air turbine starter 120 comprising a turbine wheel 36 including a hub 40 integrally attached to a turbine rotor shaft 42 and a plurality of turbine blades 38 extending radially outward from the hub 40. As mentioned above, the turbine rotor shaft 42 is configured to rotate the rotational components 260 when air flows through the turbine blades 38 and rotates the turbine wheel 36. The method 600 may further include: fluidly connecting an auxiliary power unit 310 to the air turbine starter 120. The auxiliary power unit 114 is configured to provide air to the air turbine starter 120 to rotate the turbine blades 38. The method 600 may also further include: electrically connecting the variable frequency generator 500 to the auxiliary power unit 114. The auxiliary power unit 114 is configured to generate electricity to power the variable frequency generator 500.

While the above description has described the flow process of FIG. 4 in a particular order, it should be appreciated that unless otherwise specifically required in the attached claims that the ordering of the steps may be varied.

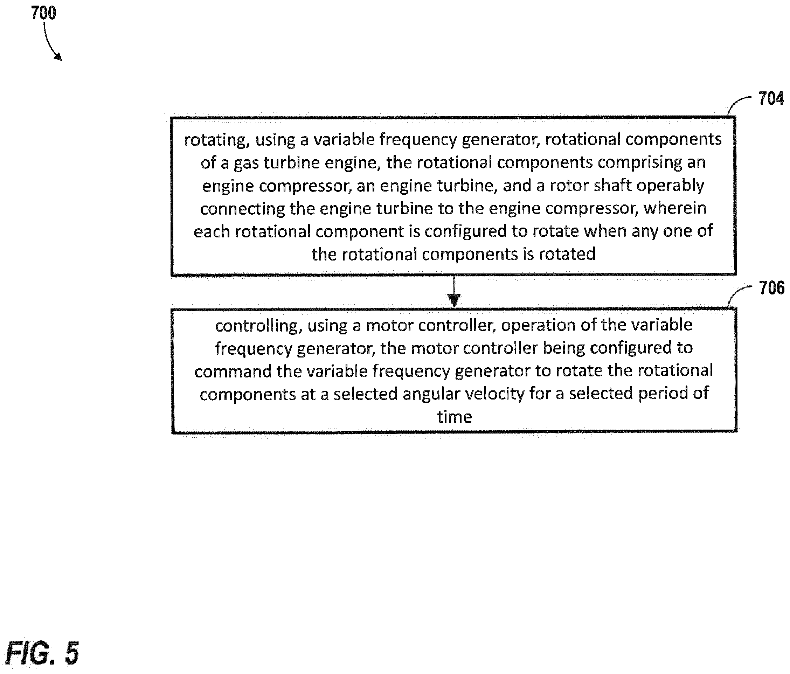

Turning now to FIG. 5 while continuing to reference FIGS. 1 to 3, FIG. 5 shows a flow diagram illustrating a method 700 of cooling a gas turbine engine 250, according to an embodiment of the present disclosure. At block 704, a variable frequency generator 500 rotates rotational components 260 of a gas turbine engine 250. As described above, the rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. At block 706, a motor controller 320 controls operation of the variable frequency generator 500. The motor controller 320 being configured to command the variable frequency generator 500 to rotate the rotational components 260 at a selected angular velocity for a selected period of time. The rotation of the rotational components 260 at selected angular velocity for a selected period of time is engine cool-down motoring.

In the event that the engine starter system 100 also includes a starter air valve 116 and an air turbine starter 120, the method 700 may also include detecting a failure in a starter air valve 116 prior to rotating the gas turbine engine 250 with the variable frequency generator 500. As mentioned above, the variable frequency generator 500 may be used as a secondary means of cool-down motoring when the start air valve 116 fails. As also mentioned above, the starter air valve 116 is fluidly connected to an air turbine starter 120 and configured to provide air to an air turbine starter 120. The air turbine starter 120 is operably connected to at least one of the rotational components 260 and configured to rotate the rotational components 260. The method 700 may also include: detecting when a temperature of the gas turbine engine 250 is less than a selected temperature; and displaying a message on a cockpit display when the temperature of the gas turbine engine 250 is less than a selected temperature. The message may indicate that the gas turbine engine 250 has sufficiently cooled.

The method 700 may further include stopping the utilization of the variable frequency generator 500 to rotate the gas turbine engine 250 when a temperature of the gas turbine engine 250 is less than a selected temperature. When the gas turbine engine 250 is less than the selected temperature the cool-down motoring may be complete and the variable frequency generator 500 may no longer be needed to rotate the rotation components of the engine. Following the completion of the cool-down motoring, the pilot may desire to start the gas turbine engine 250, and thus the method 700 may also include: opening the starter air valve 116 after the message has been displayed on the cockpit display 430 indicating that a temperature of the gas turbine engine 250 is less than a selected temperature. Once the air valve 116 is opened, the method 700 may further include: rotating, using the air turbine starter 120, rotational components 260 of the gas turbine engine 250 when the starter air valve 116 is opened.

While the above description has described the flow process of FIG. 5 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fibre optics, or via electromagnetic radiation, wherein, when the computer program code is loaded into an executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An engine starting system (100) comprising:
a gas turbine engine (250) including rotational components comprising an engine compressor (256), an engine turbine (258), and a rotor shaft (259) operably connecting the engine turbine (258) to the engine compressor (256), wherein each rotational component is configured to rotate when any one of the rotational components is rotated;
an air turbine starter (120) comprising a turbine wheel (36) including a hub (40) integrally attached to a turbine rotor shaft (42) and a plurality of turbine blades (38) extending radially from the hub (40), the turbine rotor shaft (42) being operably connected to at least one of the rotational components and configured to rotate the rotational components when air flows through the turbine blades (38) and rotates the turbine wheel (36), **characterized in that** it further comprises a variable frequency generator (500) operably connected to at least one of the rotational components, the variable frequency generator (500) being configured to rotate the rotational components; and
a motor controller (420) in electronic communication with the variable frequency generator (500), the motor controller (420) being configured to command the variable frequency generator (500) to rotate the rotational components at a selected angular velocity for a selected period of time.

2. The engine starting system of claim 1, further comprising:
an accessory gearbox (70) operably connecting the variable frequency generator (500) to at least one of the rotational components.

3. The engine starting system of claim 1 or claim 2, wherein:
the variable frequency generator (500) is configured to generate electricity when the rotational components are rotating under power of the gas turbine engine (250).

4. The engine starting system of claim 1, further comprising:
an auxiliary power unit (114) fluidly connected to the air turbine starter (120) and electrically connected to the variable frequency generator (500), the auxiliary power unit (114) being configured to generate electricity to power the variable frequency generator (500) and provide air to the air turbine starter (120) to rotate the turbine blades (38).

5. The engine starting system of claim 4, further comprising:
a starter air valve (116) fluidly connecting the auxiliary power unit (114) to the air turbine starter (120), the starter air valve (116) being configured to adjust airflow from the auxiliary power unit (114) to the air turbine starter (120).

6. A method (600) of assembling an engine starting system (100) comprising:
obtaining (604) a gas turbine engine (250) including rotational components comprising an engine compressor (256), an engine turbine (258), and a rotor shaft (259) operably connecting the engine turbine (258) to the engine compressor (256), wherein each rotational component is configured to rotate when any one of the rotational components is rotated; and
operably connecting an air turbine starter (120) to at least one of the rotational components, the air turbine starter (120) comprising a turbine wheel (36) including a hub (40) integrally attached to a turbine rotor shaft (42) and a plurality of turbine blades (38) extending radially from the hub (40), wherein the turbine rotor shaft (42) is configured to rotate the rotational components when air flows through the turbine blades (38) and rotates the turbine wheel (36), **characterized in that** it further comprises
operably connecting (606) a variable frequency generator (500) to at least one of the rotational components, the variable frequency generator (500) being configured to rotate the rotational components; and
electrically connecting (608) a motor controller (420) to the variable frequency generator (500), the motor controller (420) being configured to command the variable frequency generator (500) to rotate the rotational components at a selected angular velocity for a selected period of time.

7. The method of claim 6, wherein:
the variable frequency generator (500) is operably connected to at least one of the rotational components through an accessory gearbox (70).

8. The method of claim 6 or claim 7, wherein:
the variable frequency generator (500) generates electricity when the rotational components are rotating under power of the gas turbine engine (250).

9. The method of claim 6, further comprising:
fluidly connecting an auxiliary power unit (114) to the air turbine starter (120), the auxiliary power unit (114) being configured to provide air to the air turbine starter (120) to rotate the turbine blades (38); and
electrically connecting the variable frequency generator (500) to the auxiliary power unit (114), the auxiliary power unit (114) being configured to generate electricity to power the variable frequency generator (500).

10. The method of claim 9, wherein:
a starter air valve (116) fluidly connects the auxiliary power unit (114) to the air turbine starter (120), the starter air valve (116) being configured to adjust airflow from the auxiliary power unit (114) to the air turbine starter (120).

## Patentansprüche

1. Motorstartsystem (100), umfassend:
einen Gasturbinenmotor (250), der Rotationskomponenten beinhaltet, die einen Motorkompressor (256), eine Motorturbine (258) und eine Rotorwelle (259), die eine Wirkverbindung von der Motorturbine (258) zum Motorkompressor (256) herstellt, umfasst, wobei jede Rotationskomponente dazu konfiguriert ist, sich zu drehen, wenn eine beliebige der Rotationskomponenten gedreht wird;
einen Luftturbinenstarter (120), der ein Turbinenrad (36) umfasst, das eine Nabe (40), die integriert an einer Turbinenrotorwelle (42) angebracht ist, und eine Vielzahl von Turbinenlaufschaufeln (38) beinhaltet, die sich radial von der Nabe (40) aus erstreckt, wobei die Turbinenrotorwelle (42) in Wirkverbindung mit mindestens einer der Rotationskomponenten steht und dazu konfiguriert ist, die Rotationskomponenten zu drehen, wenn Luft durch die Turbinenlaufschaufeln (38) strömt und das Turbinenrad (36) dreht, **dadurch gekennzeichnet, dass** es ferner Folgendes umfasst
einen frequenzvariablen Generator (500), der in Wirkverbindung mit mindestens einer der Rotationskomponenten steht, wobei der frequenzvariable Generator (500) dazu konfiguriert ist, die Rotationskomponenten zu drehen; und
eine Motorsteuerung (420) in elektronischer Kommunikation mit dem frequenzvariablen Generator (500), wobei die Motorsteuerung (420) dazu konfiguriert ist, den frequenzvariablen Generator (500) anzuweisen, die Rotationskomponenten mit einer ausgewählten Winkelgeschwindigkeit über einen ausgewählten Zeitraum zu drehen.

2. Motorstartsystem nach Anspruch 1, ferner umfassend:
ein Hilfsgerätegetriebe (70), das eine Wirkverbindung von dem frequenzvariablen Generator (500) zu mindestens einer der Rotationskomponenten herstellt.

3. Motorstartsystem nach Anspruch 1 oder Anspruch 2, wobei:
der frequenzvariable Generator (500) dazu konfiguriert ist, Elektrizität zu erzeugen, wenn die Rotationskomponenten sich unter der Kraft des Gasturbinenmotors (250) drehen.

4. Motorstartsystem nach Anspruch 1, ferner umfassend:
ein Hilfsaggregat (114), das in Fluidverbindung mit dem Luftturbinenstarter (120) steht und elektrisch mit dem frequenzvariablen Generator (500) verbunden ist, wobei das Hilfsaggregat (114) dazu konfiguriert ist, Elektrizität zu erzeugen, um den frequenzvariablen Generator (500) mit Energie zu versorgen, und Luft für den Luftturbinenstarter (120) bereitzustellen, um die Turbinenlaufschaufeln (38) zu drehen.

5. Motorstartsystem nach Anspruch 4, ferner umfassend:
ein Starterluftventil (116), das eine Fluidverbindung von dem Hilfsaggregat (114) zum Luftturbinenstarter (120) herstellt, wobei das Starterluftventil (116) dazu konfiguriert ist, den Luftstrom von dem Hilfsaggregat (114) zum Luftturbinenstarter (120) anzupassen.

6. Verfahren (600) zum Zusammenbauen eines Motorstartsystems (100), umfassend:
Beschaffen (604) eines Gasturbinenmotors (250), der Rotationskomponenten beinhaltet, die einen Motorkompressor (256), eine Motorturbine (258) und eine Rotorwelle (259), die eine Wirkverbindung von der Motorturbine (258) zum Motorkompressor (256) herstellt, umfasst, wobei jede Rotationskomponente dazu konfiguriert ist, sich zu drehen, wenn eine beliebige der Rotationskomponenten gedreht wird; und
Herstellen einer Wirkverbindung von einem Luftturbinenstarter (120) zu mindestens einer der Rotationskomponenten, wobei der Luftturbinenstarter (120) ein Turbinenrad (36) umfasst, das eine Nabe (40), die integriert an einer Turbinenrotorwelle (42) angebracht ist, und eine Vielzahl von Turbinenlaufschaufeln (38) beinhaltet, die sich radial von der Nabe (40) aus erstreckt, wobei die Turbinenrotorwelle (42) dazu konfiguriert ist, die Rotationskomponenten zu drehen, wenn Luft durch die Turbinenlaufschaufeln (38) strömt und das Turbinenrad (36) dreht, **dadurch gekennzeichnet, dass** es ferner Folgendes umfasst
Herstellen einer Wirkverbindung (606) von einem frequenzvariablen Generator (500) zu mindestens einer der Rotationskomponenten, wobei der frequenzvariable Generator (500) dazu konfiguriert ist, die Rotationskomponenten zu drehen; und
Herstellen einer elektrischen Verbindung (608) von einer Motorsteuerung (420) zu dem frequenzvariablen Generator (500), wobei die Motorsteuerung (420) dazu konfiguriert ist, den frequenzvariablen Generator (500) anzuweisen, die Rotationskomponenten mit einer ausgewählten Winkelgeschwindigkeit über einen ausgewählten Zeitraum zu drehen.

7. Verfahren nach Anspruch 6, wobei:
der frequenzvariable Generator (500) über ein Hilfsgerätegetriebe (70) in Wirkverbindung mit mindestens einer der Rotationskomponenten steht.

8. Verfahren nach Anspruch 6 oder Anspruch 7, wobei:
der frequenzvariable Generator (500) Elektrizität erzeugt, wenn die Rotationskomponenten sich unter der Kraft des Gasturbinenmotors (250) drehen.

9. Verfahren nach Anspruch 6, ferner umfassend:
Herstellen einer Fluidverbindung von einem Hilfsaggregat (114) zum Luftturbinenstarter (120), wobei das Hilfsaggregat (114) dazu konfiguriert ist, Luft zum Luftturbinenstarter (120) zu liefern, um die Turbinenlaufschaufeln (38) zu drehen; und
Herstellen einer elektrischen Verbindung vom frequenzvariablen Generator (500) zum Hilfsaggregat (114), wobei das Hilfsaggregat (114) dazu konfiguriert ist, Elektrizität zu erzeugen, um den frequenzvariablen Generator (500) mit Energie zu versorgen.

10. Verfahren nach Anspruch 9, wobei:
ein Starterluftventil (116) eine Fluidverbindung von dem Hilfsaggregat (114) zum Luftturbinenstarter (120) herstellt, wobei das Starterluftventil (116) dazu konfiguriert ist, den Luftstrom von dem Hilfsaggregat (114) zum Luftturbinenstarter (120) anzupassen.

## Revendications

1. Système de démarrage de moteur (100) comprenant :
un moteur à turbine à gaz (250) comportant des composants rotatifs comprenant un compresseur de moteur (256), une turbine de moteur (258) et un arbre de rotor (259) reliant fonctionnellement la turbine de moteur (258) au compresseur de moteur (256), dans lequel chaque composant rotatif est configuré pour tourner lorsque l'un quelconque des composants rotatifs est tourné ;
un démarreur de turbine à air (120) comprenant une roue de turbine (36) comportant un moyeu (40) solidaire d'un arbre de rotor de turbine (42) et une pluralité d'aubes de turbine (38) s'étendant radialement depuis le moyeu (40), l'arbre de rotor de turbine (42) étant relié fonctionnellement à au moins l'un des composants rotatifs et configuré pour faire tourner les composants rotatifs lorsque l'air circule à travers les aubes de turbine (38) et fait tourner la roue de turbine (36), **caractérisé en ce qu'**il comprend en outre
un générateur à fréquence variable (500) relié fonctionnellement à au moins l'un des composants rotatifs, le générateur à fréquence variable (500) étant configuré pour faire tourner les composants rotatifs ; et
un dispositif de commande de moteur (420) en communication électronique avec le générateur à fréquence variable (500), le dispositif de commande de moteur (420) étant configuré pour commander au générateur à fréquence variable (500) de faire tourner les composants rotatifs à une vitesse angulaire sélectionnée pendant une période de temps sélectionnée.

2. Système de démarrage de moteur selon la revendication 1, comprenant en outre :
un boîtier d'entraînement d'accessoires (70) reliant fonctionnellement le générateur à fréquence variable (500) à au moins l'un des composants rotatifs.

3. Système de démarrage de moteur selon la revendication 1 ou la revendication 2, dans lequel :
le générateur à fréquence variable (500) est configuré pour générer de l'électricité lorsque les composants rotatifs tournent sous la puissance du moteur à turbine à gaz (250).

4. Système de démarrage de moteur selon la revendication 1, comprenant en outre :
une unité de puissance auxiliaire (114) reliée fluidiquement au démarreur de turbine à air (120) et reliée électriquement au générateur à fréquence variable (500), l'unité de puissance auxiliaire (114) étant configurée pour générer de l'électricité afin d'alimenter le générateur à fréquence variable (500) et de fournir de l'air au démarreur de turbine à air (120) pour faire tourner les aubes de turbine (38).

5. Système de démarrage de moteur selon la revendication 4, comprenant en outre :
une soupape d'air de démarrage (116) reliant fluidiquement l'unité de puissance auxiliaire (114) au démarreur de turbine à air (120), la soupape d'air de démarrage (116) étant configurée pour régler le flux d'air depuis l'unité de puissance auxiliaire (114) vers le démarreur de turbine à air (120).

6. Procédé (600) d'assemblage d'un système de démarrage de moteur (100) comprenant :
l'obtention (604) d'un moteur à turbine à gaz (250) comportant des composants rotatifs comprenant un compresseur de moteur (256), une turbine de moteur (258) et un arbre de rotor (259) reliant fonctionnellement la turbine de moteur (258) au compresseur de moteur (256), dans lequel chaque composant rotatif est configuré pour tourner lorsque l'un quelconque des composants rotatifs est tourné ; et
la liaison fonctionnelle d'un démarreur de turbine à air (120) à au moins l'un des composants rotatifs, le démarreur de turbine à air (120) comprenant une roue de turbine (36) comportant un moyeu (40) solidaire d'un arbre de rotor de turbine (42) et une pluralité d'aubes de turbine (38) s'étendant radialement depuis le moyeu (40), dans lequel l'arbre de rotor de turbine (42) est configuré pour faire tourner les composants rotatifs lorsque l'air circule à travers les aubes de turbine (38) et fait tourner la roue de turbine (36), **caractérisé en ce qu'**il comprend en outre la liaison fonctionnelle (606) d'un générateur à fréquence variable (500) à au moins l'un des composants rotatifs, le générateur à fréquence variable (500) étant configuré pour faire tourner les composants rotatifs ; et
la liaison électrique (608) d'un dispositif de commande de moteur (420) au générateur à fréquence variable (500), le dispositif de commande de moteur (420) étant configuré pour commander au générateur à fréquence variable (500) de faire tourner les composants rotatifs à une vitesse angulaire sélectionnée pendant une période de temps sélectionnée.

7. Procédé selon la revendication 6, dans lequel :
le générateur à fréquence variable (500) est relié fonctionnellement à au moins l'un des composants rotatifs par l'intermédiaire d'un boîtier d'entraînement d'accessoires (70).

8. Procédé selon la revendication 6 ou 7, dans lequel :
le générateur à fréquence variable (500) génère de l'électricité lorsque les composants rotatifs tournent sous la puissance du moteur à turbine à gaz (250).

9. Procédé selon la revendication 6, comprenant en outre :
la liaison fluidique d'une unité de puissance auxiliaire (114) au démarreur de turbine à air (120), l'unité de puissance auxiliaire (114) étant configurée pour fournir de l'air au démarreur de turbine à air (120) afin de faire tourner les aubes de turbine (38) ; et
la liaison électrique du générateur à fréquence variable (500) à l'unité de puissance auxiliaire (114), l'unité de puissance auxiliaire (114) étant configurée pour générer de l'électricité afin d'alimenter le générateur à fréquence variable (500).

10. Procédé selon la revendication 9, dans lequel :
une soupape d'air de démarrage (116) relie fluidiquement l'unité de puissance auxiliaire (114) au démarreur de turbine à air (120), la soupape d'air de démarrage (116) étant configurée pour régler le flux d'air depuis l'unité de puissance auxiliaire (114) vers le démarreur de turbine à air (120).
